# EUROPEAN PATENT APPLICATION

(11) **EP 4 642 085 A1**
(43) Date of publication of application: **29.10.2025**
(21) Application number: 23905455.4
(22) Date of filing: 30.10.2023
(51) Int. Cl.: H04W 24/04

(54) **RADIO FREQUENCY PATH DETERMINATION METHOD AND APPARATUS, DEVICE, AND STORAGE MEDIUM**

(30) Priority: 20.12.2022 CN 202211644042
(71) Applicant: ROLLING WIRELESS S.A.R.L., 2540 Luxembourg (LU)
(72) Inventor: LIU, Qiang, Shenzhen, Guangdong 518055 (CN)
(74) Representative: Cabinet Netter
(86) International application number: PCT/CN2023/127679
(87) International publication number: WO 2024/131283

(57) **Abstract**

Disclosed are a method and an apparatus for determining a radio frequency path, a device, and a storage medium. The method includes: acquiring a first radio frequency path identifier and scanning radio frequency components corresponding to the first radio frequency path identifier; when it is determined that there is no faulty component among the radio frequency components corresponding to the first radio frequency path identifier, taking the first radio frequency path identifier as a target radio frequency path identifier; when it is determined that there is a faulty component among the radio frequency components corresponding to the first radio frequency path identifier, selecting a second radio frequency path identifier from a plurality of pre-configured radio frequency path identifiers; and scanning a radio frequency component corresponding to the second radio frequency path identifier, and when it is determined that there is no faulty component among the radio frequency components corresponding to the second radio frequency path identifier, taking the second radio frequency path identifier as a target radio frequency path identifier.

## Description

### CROSS-REFERENCE TO RELATED APPLICATIONS

The present disclosure claims all the benefits of the Chinese patent application No. 202211644042.X, filed on December 20, 2022 before the China National Intellectual Property Administration of the People's Republic of China, entitled "Method and Apparatus for Determining Radio Frequency Path, Device, and Storage Medium", which are explicitly incorporated herein by reference in its entirety.

### FIELD

The present disclosure generally relates to the field of communication, and more specifically to a method and an apparatus for determining a radio frequency path, a device, and a storage medium.

### BACKGROUND

With the development of the concept of intelligent vehicles and the development of cellular wireless communication technology, a cellular wireless communication module has become an essential part of new intelligent vehicles or electric vehicles, enabling vehicles to access cellular wireless network, thereby providing a variety of functions for vehicle owners.

At the same time, with the development and advancement of microelectronic technology and wireless communication, design complexity of the cellular wireless communication module has also greatly increased, complexity of radio frequency components has greatly increased, and a probability of fault has also greatly increased. A radio frequency driver framework in the related art, under normal circumstances, requires detecting all radio frequency components and ensuring that the radio frequency components can communicate normally, so that the radio frequency driver can be loaded and operate normally. However, under emergency circumstances such as vehicle collision, vehicle fire, and vehicle falling into water, if part of radio frequency components are damaged, an emergency number may fail to be dialed successfully, thereby delaying timely rescue and causing avoidable loss.

### SUMMARY

In a first aspect, the present disclosure provides a method for determining a radio frequency path, including:
acquiring a first radio frequency path identifier and scanning radio frequency components corresponding to the first radio frequency path identifier;
when it is determined that there is no faulty component among the radio frequency components corresponding to the first radio frequency path identifier, taking the first radio frequency path identifier as a target radio frequency path identifier;
when it is determined that there is a faulty component among the radio frequency components corresponding to the first radio frequency path identifier, selecting a second radio frequency path identifier from a plurality of pre-configured radio frequency path identifiers; and
scanning a radio frequency component corresponding to the second radio frequency path identifier, and when it is determined that there is no faulty component among the radio frequency components corresponding to the second radio frequency path identifier, taking the second radio frequency path identifier as a target radio frequency path identifier.

In a second aspect, the present disclosure provides a method for determining a radio frequency path, including:
in an initialization stage, acquiring a first radio frequency path identifier in a configuration file and scanning a radio frequency component corresponding to the first radio frequency path identifier;
when it is determined that there is no faulty component among the radio frequency components corresponding to the first radio frequency path identifier, taking the first radio frequency path identifier as an initialization radio frequency path identifier;
when it is determined that there is a faulty component among the radio frequency components corresponding to the first radio frequency path identifier, selecting a second radio frequency path identifier from a plurality of pre-configured radio frequency path identifiers; and
scanning a radio frequency component corresponding to the second radio frequency path identifier, and when it is determined that there is no faulty component among the radio frequency components corresponding to the second radio frequency path identifier, taking the second radio frequency path identifier as an initialization radio frequency path identifier.

In some embodiments, the method includes:
when there is no second radio frequency path identifier among the plurality of pre-configured radio frequency path identifiers, determining that a radio frequency system is in an offline mode.

In some embodiments, the method further includes:
in a data transmission stage, in response to a demand for transmitting target data, scanning a radio frequency component corresponding to the initialization radio frequency path identifier;
when it is determined that there is no faulty component among the radio frequency components corresponding to the initialization radio frequency path identifier, transmitting the target data through the radio frequency components corresponding to the initialization radio frequency path identifier;
when it is determined that there is a faulty component among the radio frequency components corresponding to the initialization radio frequency path identifier, selecting a third radio frequency path identifier from the plurality of pre-configured radio frequency path identifiers; and
scanning radio frequency components corresponding to the third radio frequency path identifier, and when it is determined that there is no faulty component among the radio frequency components corresponding to the third radio frequency path identifier, transmitting the target data through the radio frequency components corresponding to the third radio frequency path identifier.

In some embodiments, the method includes:
when there is no third radio frequency path identifier among the plurality of pre-configured radio frequency path identifiers, determining that a radio frequency system is in an offline mode.

In some embodiments, said transmitting the target data includes dialing an emergency number.

In a third aspect, the present disclosure provides an apparatus for determining a radio frequency path, including:
a first scanning module configured to acquire a first radio frequency path identifier and scan radio frequency components corresponding to the first radio frequency path identifier;
a first determination module configured to take the first radio frequency path identifier as a target radio frequency path identifier when it is determined that there is no faulty component among the radio frequency components corresponding to the first radio frequency path identifier;
a selection module configured to select a second radio frequency path identifier from a plurality of pre-configured radio frequency path identifiers when it is determined that there is a faulty component among the radio frequency components corresponding to the first radio frequency path identifier; and
a second determination module configured to scan a radio frequency component corresponding to the second radio frequency path identifier, and take the second radio frequency path identifier as a target radio frequency path identifier when it is determined that there is no faulty component among the radio frequency components corresponding to the second radio frequency path identifier.

In a fourth aspect, the present disclosure provides an apparatus for determining a radio frequency path, including:
a second scanning module configured to in an initialization stage, acquire a first radio frequency path identifier in a configuration file and scan a radio frequency component corresponding to the first radio frequency path identifier;
a third determination module configured to take the first radio frequency path identifier as an initialization radio frequency path identifier when it is determined that there is no faulty component among the radio frequency components corresponding to the first radio frequency path identifier;
a second selection module configured to select a second radio frequency path identifier from a plurality of pre-configured radio frequency path identifiers when it is determined that there is a faulty component among the radio frequency components corresponding to the first radio frequency path identifier; and
a fourth determination module configured to scan a radio frequency component corresponding to the second radio frequency path identifier, and take the second radio frequency path identifier as an initialization radio frequency path identifier when it is determined that there is no faulty component among the radio frequency components corresponding to the second radio frequency path identifier.

In a fifth aspect, the present disclosure provides an electronic device including: a processor, a memory, and a communication bus, in which the processor and the memory communicate with each other through the communication bus;
the memory is configured to store a computer program; and
the processor is configured to execute the program stored in the memory to implement the method for determining a radio frequency path of the present disclosure.

In a sixth aspect, the present disclosure provides a computer-readable storage medium in which a computer program is stored, in which the computer program, when executed by a processor, implements the method for determining a radio frequency path of the present disclosure.

In some embodiments, because a plurality of radio frequency path identifiers are pre-configured in the present disclosure, when there is a faulty component among the radio frequency components corresponding to the first radio frequency path identifiers, causing the radio frequency components incapable of transmitting data, a second radio frequency path identifier capable of transmitting data can be found from the plurality of pre-configured radio frequency path identifiers to serve as the target radio frequency path identifier, thereby realizing data transmission and ensuring reliability of data transmission.

### BRIEF DESCRIPTION OF DRAWINGS

The accompanying drawings herein are incorporated into and constitute a part of the present specification, illustrate embodiments in accordance with the present disclosure, and are used to explain the principles of the present disclosure together with the specification.

In order to more clearly explain the technical solutions of the embodiments of the present disclosure, the accompanying drawings that are required to be used in the embodiments are briefly described below. Obviously, it should be understood that for those of ordinary skill in the art, other drawings can be obtained according to these drawings without inventive work.
FIG. 1 is a flowchart of a method for determining a radio frequency path according to an embodiment of the present disclosure;
FIG. 2 is a hardware structure diagram of a radio frequency component according to an embodiment of the present disclosure;
FIG. 3 is another flowchart of a method for determining a radio frequency path according to an embodiment of the present disclosure;
FIG. 4 is a structure diagram of an apparatus for determining a radio frequency path according to an embodiment of the present disclosure; and
FIG. 5 is another structure diagram of an apparatus for determining a radio frequency path according to an embodiment of the present disclosure.

### DETAILED DESCRIPTION

In order to make objects, technical solutions, and advantages of embodiments of the disclosure clearer, the technical solutions in the embodiments of the disclosure will be clearly and fully described in combination with the accompanying drawings in the embodiments of the present disclosure. Obviously, the embodiments to be described are part of embodiments but not all embodiments of the disclosure. Based on the embodiments of the disclosure, all other embodiments obtained by those of ordinary skill in the art without inventive work shall fall within the scope of the disclosure.

A first aspect of the present disclosure provides a method for determining a radio frequency path, which is applicable to an electronic device. The electronic device is specifically a module capable of realizing a communication function, or a vehicle-mounted device including the module.

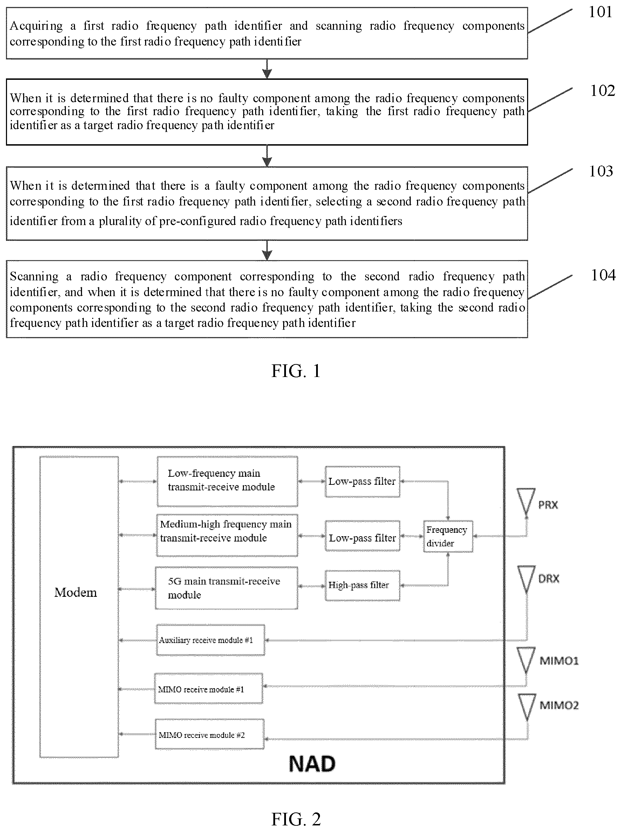

As shown in FIG. 1, the method includes the following steps:
step 101, acquiring a first radio frequency path identifier and scanning radio frequency components corresponding to the first radio frequency path identifier;
step 102, when it is determined that there is no faulty component among the radio frequency components corresponding to the first radio frequency path identifier, taking the first radio frequency path identifier as a target radio frequency path identifier;
step 103, when it is determined that there is a faulty component among the radio frequency components corresponding to the first radio frequency path identifier, selecting a second radio frequency path identifier from a plurality of pre-configured radio frequency path identifiers; and
step 104, scanning a radio frequency component corresponding to the second radio frequency path identifier, and when it is determined that there is no faulty component among the radio frequency components corresponding to the second radio frequency path identifier, taking the second radio frequency path identifier as a target radio frequency path identifier.

In some embodiments, a first radio frequency path identifier is acquired, the first radio frequency path identifier corresponds to a plurality of radio frequency components, and the electronic device scans the plurality of radio frequency components corresponding to the first radio frequency path identifier.

Referring to FIG. 2, FIG. 2 is a hardware structure diagram of a radio frequency component illustrated in the present embodiment. Regarding the radio frequency component shown in FIG. 2, paths formed by the radio frequency components are compiled into individual radio frequency path identifiers in advance; therefore, radio frequency paths formed by the radio frequency components corresponding to each radio frequency path identifier is capable of transmitting data. A plurality of radio frequency path identifiers are pre-configured in the electronic device. When it is determined that there is a faulty component among the radio frequency components corresponding to the first radio frequency path identifier, a second radio frequency path identifier is selected from a plurality of pre-configured radio frequency path identifiers.

**In** some embodiments, the first radio frequency path identifier in step 101 is one of the pre-configured radio frequency path identifiers, which is not specifically limited by the present embodiment. It should be understood that radio frequency components corresponding to different radio frequency path identifiers are not identical, that is, there are some radio frequency components that simultaneously match different radio frequency path identifiers.

In some embodiments, the above-mentioned method for determining a radio frequency path is applicable to an initialization stage of the electronic device, and/or a data transmission stage of the electronic device.

In some embodiments, when the method is applied to an initialization stage of the electronic device, the electronic device acquires a first radio frequency path identifier (specifically a radio frequency path identifier in configuration files) and scans radio frequency components corresponding to the first radio frequency path identifier; and when it is determined that there is no faulty component among the radio frequency components corresponding to the first radio frequency path identifier, takes the first radio frequency path identifier as an initialization radio frequency path identifier (that is, the target radio frequency path identifier), and takes a radio frequency path formed by the radio frequency component corresponding to the first radio frequency path identifier as a radio frequency path capable of transmitting data for subsequent data transmission.

When it is determined that there is a faulty component among the radio frequency components corresponding to the first radio frequency path identifier, a second radio frequency path identifier is selected from a plurality of pre-configured radio frequency path identifiers; a radio frequency component corresponding to the second radio frequency path identifier is scanned, and when it is determined that there is no faulty component among the radio frequency components corresponding to the second radio frequency path identifier, the second radio frequency path identifier is taken as an initialization radio frequency path identifier (that is, the target radio frequency path identifier), and takes a radio frequency path formed by the radio frequency component corresponding to the second radio frequency path identifier as a radio frequency path capable of transmitting data for subsequent data transmission.

When the method is applied to the data transmission stage, the electronic device acquires a first radio frequency path identifier (specifically an initialization radio frequency path identifier after the initialization stage) and scans radio frequency components corresponding to the first radio frequency path identifier; and takes the first radio frequency path identifier as an ultimately used radio frequency path identifier (that is, the target radio frequency path identifier) when it is determined that there is no faulty component among the radio frequency components corresponding to the first radio frequency path identifier, and a radio frequency path formed by the radio frequency component corresponding to the first radio frequency path identifier is used for data transmission.

When it is determined that there is a faulty component among the radio frequency components corresponding to the first radio frequency path identifier, a second radio frequency path identifier is selected from a plurality of pre-configured radio frequency path identifiers; and a radio frequency component corresponding to the second radio frequency path identifier is scanned, and when it is determined that there is no faulty component among the radio frequency components corresponding to the second radio frequency path identifier, the second radio frequency path identifier is taken as an ultimately used radio frequency path identifier (that is, the target radio frequency path identifier), and a radio frequency path formed by the radio frequency component corresponding to the second radio frequency path identifier is used for data transmission.

Regardless of whether in the initialization stage or in the data transmission stage, because a plurality of radio frequency path identifiers are pre-configured in the present disclosure, when there is a faulty component among the radio frequency components corresponding to the first radio frequency path identifiers, causing the radio frequency components incapable of transmitting data, a second radio frequency path identifier capable of transmitting data may be found from the plurality of pre-configured radio frequency path identifiers to serve as the target radio frequency path identifier, thereby realizing data transmission and ensuring reliability of data transmission.

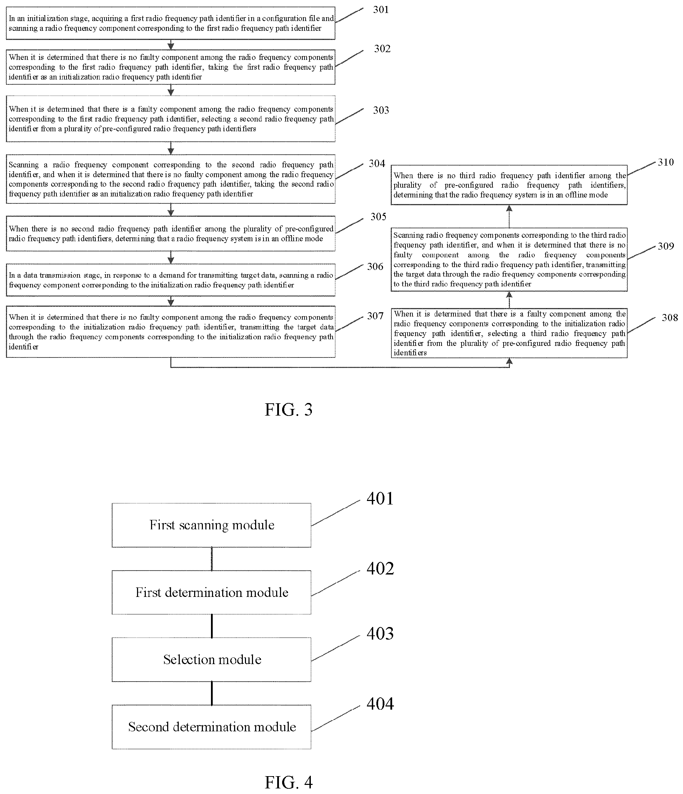

A second aspect of the present disclosure also provides a method for determining a radio frequency path, as shown in FIG. 3, including:
step 301, in an initialization stage, acquiring a first radio frequency path identifier in a configuration file and scanning a radio frequency component corresponding to the first radio frequency path identifier;
step 302, when it is determined that there is no faulty component among the radio frequency components corresponding to the first radio frequency path identifier, taking the first radio frequency path identifier as an initialization radio frequency path identifier;
step 303, when it is determined that there is a faulty component among the radio frequency components corresponding to the first radio frequency path identifier, selecting a second radio frequency path identifier from a plurality of pre-configured radio frequency path identifiers; and
step 304, scanning a radio frequency component corresponding to the second radio frequency path identifier, and when it is determined that there is no faulty component among the radio frequency components corresponding to the second radio frequency path identifier, taking the second radio frequency path identifier as an initialization radio frequency path identifier.

In some embodiments, in the initialization stage, the electronic device acquires a first radio frequency path identifier in a configuration file and scans a radio frequency component corresponding to the first radio frequency path identifier; when it is determined that there is no faulty component among the radio frequency components corresponding to the first radio frequency path identifier, taking the first radio frequency path identifier as an initialization radio frequency path identifier, and takes a radio frequency path formed by the radio frequency component corresponding to the first radio frequency path identifier as a radio frequency path capable of transmitting data for subsequent data transmission.

When it is determined that there is a faulty component among the radio frequency components corresponding to the first radio frequency path identifier, a second radio frequency path identifier is selected from a plurality of pre-configured radio frequency path identifiers; a radio frequency component corresponding to the second radio frequency path identifier is scanned, and when it is determined that there is no faulty component among the radio frequency components corresponding to the second radio frequency path identifier, the second radio frequency path identifier is taken as a target radio frequency path identifier, and a radio frequency path formed by the radio frequency component corresponding to the second radio frequency path identifier is taken as a radio frequency path capable of transmitting data for subsequent data transmission.

In the method of the present embodiment, in the initialization stage, when there is a faulty component among the radio frequency components corresponding to the first radio frequency path identifiers, causing the radio frequency components incapable of transmitting data, a second radio frequency path identifier capable of transmitting data may be found from the plurality of pre-configured radio frequency path identifiers to serve as the initialization radio frequency path identifier. Meanwhile, a radio frequency path formed by the radio frequency component corresponding to the second radio frequency path identifier is taken as a radio frequency path capable of transmitting data for subsequent data transmission, thereby ensuring reliability of subsequent data transmission.

In some embodiments, in an embodiment of the present disclosure, the method further includes:
step 305, when there is no second radio frequency path identifier among the plurality of pre-configured radio frequency path identifiers, determining that a radio frequency system is in an offline mode.

In some embodiments, when it is determined that there is a faulty component among the radio frequency components corresponding to the first radio frequency path identifier, and when there is no second radio frequency path identifier among the plurality of pre-configured radio frequency path identifiers, it is determined that a radio frequency system is in an offline mode, which cannot transmit data at this time.

In an embodiment of the present disclosure, the method further includes:
step 306, in a data transmission stage, in response to a demand for transmitting target data, scanning a radio frequency component corresponding to the initialization radio frequency path identifier;
step 307, when it is determined that there is no faulty component among the radio frequency components corresponding to the initialization radio frequency path identifier, transmitting the target data through the radio frequency components corresponding to the initialization radio frequency path identifier;
step 308, when it is determined that there is a faulty component among the radio frequency components corresponding to the initialization radio frequency path identifier, selecting a third radio frequency path identifier from the plurality of pre-configured radio frequency path identifiers; and
step 309, scanning radio frequency components corresponding to the third radio frequency path identifier, and when it is determined that there is no faulty component among the radio frequency components corresponding to the third radio frequency path identifier, transmitting the target data through the radio frequency components corresponding to the third radio frequency path identifier.

In a data transmission stage, in response to a demand for transmitting target data, a radio frequency component corresponding to the initialization radio frequency path identifier determined in the initialization stage is scanned; and the initialization radio frequency path identifier is taken as an ultimately used radio frequency path identifier and the target data is transmitted through the radio frequency components corresponding to the initialization radio frequency path identifier when it is determined that there is no faulty component among the radio frequency components corresponding to the initialization radio frequency path identifier.

When it is determined that there is a faulty component among the radio frequency components corresponding to the initialization radio frequency path identifier, a third radio frequency path identifier is selected from the plurality of pre-configured radio frequency path identifiers; radio frequency components corresponding to the third radio frequency path identifier are scanned, and when it is determined that there is no faulty component among the radio frequency components corresponding to the third radio frequency path identifier, the initialization radio frequency path identifier is taken as the ultimately used radio frequency path identifier, and the target data is transmitted through the radio frequency components corresponding to the initialization radio frequency path identifier.

When it is determined that there is a faulty component among the radio frequency components corresponding to the initialization radio frequency path identifier, a third radio frequency path identifier is selected from the plurality of pre-configured radio frequency path identifiers; and radio frequency components corresponding to the third radio frequency path identifier are scanned, and when it is determined that there is no faulty component among the radio frequency components corresponding to the third radio frequency path identifier, the third radio frequency path identifier is taken as an ultimately used radio frequency path identifier, and the target data is transmitted through the radio frequency components corresponding to the third radio frequency path identifier.

In the method of the present embodiment, in the data transmission stage, when there is a faulty component among the radio frequency components corresponding to the initialization radio frequency path identifiers, causing the radio frequency components incapable of transmitting data, a third radio frequency path identifier capable of transmitting data may be found from the plurality of pre-configured radio frequency path identifiers to serve as the ultimately used radio frequency path identifier, and the target data is transmitted through the radio frequency components corresponding to the third radio frequency path identifier, thereby realizing data transmission and ensuring reliability of data transmission.

In an embodiment of the present disclosure, the method further includes:
step 310, when there is no third radio frequency path identifier among the plurality of pre-configured radio frequency path identifiers, determining that the radio frequency system is in an offline mode.

In some embodiments, when it is determined that there is a faulty component among the radio frequency components corresponding to the initialization radio frequency path identifier, and when there is no third radio frequency path identifier among the plurality of pre-configured radio frequency path identifiers, it is determined that the radio frequency system is in an offline mode, which cannot transmit data at this time.

It is understandable that transmitting the target data may be specifically emergency number dialing, normal telephone calling, or digital information transmission, and a specific form of transmitting the target data is not limited.

Based on the same concept, a third aspect of the present disclosure provides a radio frequency path determination apparatus as shown in FIG. 4, including:
a first scanning module 401 configured to acquire a first radio frequency path identifier and scan radio frequency components corresponding to the first radio frequency path identifier;
a first determination module 402 configured to take the first radio frequency path identifier as a target radio frequency path identifier when it is determined that there is no faulty component among the radio frequency components corresponding to the first radio frequency path identifier;
a selection module 403 configured to select a second radio frequency path identifier from a plurality of pre-configured radio frequency path identifiers when it is determined that there is a faulty component among the radio frequency components corresponding to the first radio frequency path identifier; and
a second determination module 404 configured to scan a radio frequency component corresponding to the second radio frequency path identifier, and take the second radio frequency path identifier as a target radio frequency path identifier when it is determined that there is no faulty component among the radio frequency components corresponding to the second radio frequency path identifier.

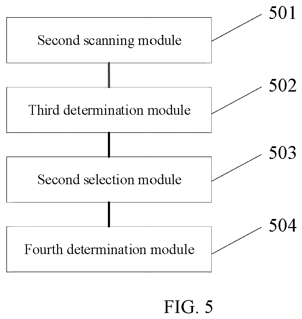

Based on the same concept, a fourth aspect of the present disclosure further provides a radio frequency path determination apparatus as shown in FIG. 5, including:
a second scanning module 501 configured to in an initialization stage, acquire a first radio frequency path identifier in a configuration file and scan a radio frequency component corresponding to the first radio frequency path identifier;
a third determination module 502 configured to take the first radio frequency path identifier as an initialization radio frequency path identifier when it is determined that there is no faulty component among the radio frequency components corresponding to the first radio frequency path identifier;
a second selection module 503 configured to select a second radio frequency path identifier from a plurality of pre-configured radio frequency path identifiers when it is determined that there is a faulty component among the radio frequency components corresponding to the first radio frequency path identifier; and
a fourth determination module 504 configured to scan a radio frequency component corresponding to the second radio frequency path identifier, and take the second radio frequency path identifier as an initialization radio frequency path identifier when it is determined that there is no faulty component among the radio frequency components corresponding to the second radio frequency path identifier.

**In** some embodiments, the apparatus is configured to:
determine that a radio frequency system is in an offline mode when there is no second radio frequency path identifier among the plurality of pre-configured radio frequency path identifiers.

**In** some embodiments, the apparatus is further configured to:
in a data transmission stage, in response to a demand for transmitting target data, scan a radio frequency component corresponding to the initialization radio frequency path identifier;
when it is determined that there is no faulty component among the radio frequency components corresponding to the initialization radio frequency path identifier, transmit the target data through the radio frequency components corresponding to the initialization radio frequency path identifier;
when it is determined that there is a faulty component among the radio frequency components corresponding to the initialization radio frequency path identifier, select a third radio frequency path identifier from the plurality of pre-configured radio frequency path identifiers; and
scan radio frequency components corresponding to the third radio frequency path identifier, and when it is determined that there is no faulty component among the radio frequency components corresponding to the third radio frequency path identifier, transmit the target data through the radio frequency components corresponding to the third radio frequency path identifier.

In some embodiments, the apparatus is configured to:
when there is no third radio frequency path identifier among the plurality of pre-configured radio frequency path identifiers, determine that a radio frequency system is in an offline mode.

In some embodiments, said transmitting the target data includes dialing an emergency number.

Based on the same concept, a fifth aspect of the present disclosure further provides an electronic device including: a processor, a memory, and a communication bus, in which the processor and the memory communicate with each other through the communication bus;
the memory is configured to store a computer program; and
the processor is configured to execute the program stored in the memory to implement the method for determining a radio frequency path of the present disclosure.

Based on the same concept, a sixth aspect of the present disclosure provides a computer-readable storage medium in which a computer program is stored, in which the computer program, when executed by a processor, implements the method for determining a radio frequency path of the present disclosure.

The embodiments described above may be carried out in whole or in part by software, hardware, firmware, or any combination thereof. When implemented with software, the embodiments may be carried out in whole or in part in the form of a computer program product. The computer program product comprises one or more computer instructions. When the computer program instructions are loaded and executed on a computer, the processes or functions according to the embodiments of the present disclosure are produced in whole or in part. The computer may be a universal computer, a dedicated computer, a computer network, or other programmable devices. The computer instructions may be stored in the computer readable storage medium or transmitted from one computer readable storage medium to another computer readable storage medium. For example, the computer instructions may be transmitted from one website, computer, server, or data center to another website, computer, server, or data center via a wired manner (such as coaxial cable, optical fiber, or digital subscriber line (DSL)) or a wireless manner (such as infrared, radio, or microwave). The computer readable storage medium may be any available medium that can be accessed by a computer, or a data storage device such as a server or a data center, in which one or more available media are integrated. The available medium may be a magnetic medium (such as a floppy disk, a hard disk, a magnetic tape), an optical medium (for example, DVD), a semiconductor medium (for example, a solid state disk (SSD)), and the like.

It is noted that relationship terms such as "first" and "second" herein are used solely to distinguish one entity or operation from another entity or operation without necessarily requiring or implying any actual relationship or order between the entities or operations. Furthermore, the terms "comprise", "comprising", or any other variants thereof are intended to encompass a non-exclusive inclusion, such that a process, method, article, or device that comprises a series of elements does not only comprise those elements but comprises other elements not expressly listed or elements inherent to such a process, method, article, or device. Without more limitations, an element defined by a phrase "comprise a" does not preclude the presence of additional identical elements in the process, method, article, or device that comprises the elements.

The foregoing description is only description of embodiments of the present disclosure to enable one skilled in the art to understand or carry out the present disclosure. Various modifications to these embodiments will be apparent to one skilled in the art, and general principles defined herein may be carried out in other embodiments without departing from the spirit or scope of the present disclosure. Therefore, the present disclosure is not limited to the embodiments shown herein, but conforms to the widest scope consistent with the principles and novel features applied herein.

## Claims

1. A method for determining a radio frequency path, comprising:
acquiring a first radio frequency path identifier and scanning radio frequency components corresponding to the first radio frequency path identifier;
when it is determined that there is no faulty component among the radio frequency components corresponding to the first radio frequency path identifier, taking the first radio frequency path identifier as a target radio frequency path identifier;
when it is determined that there is a faulty component among the radio frequency components corresponding to the first radio frequency path identifier, selecting a second radio frequency path identifier from a plurality of pre-configured radio frequency path identifiers; and
scanning a radio frequency component corresponding to the second radio frequency path identifier, and when it is determined that there is no faulty component among the radio frequency components corresponding to the second radio frequency path identifier, taking the second radio frequency path identifier as a target radio frequency path identifier.

2. A method for determining a radio frequency path, comprising:
in an initialization stage, acquiring a first radio frequency path identifier in a configuration file and scanning a radio frequency component corresponding to the first radio frequency path identifier;
when it is determined that there is no faulty component among the radio frequency components corresponding to the first radio frequency path identifier, taking the first radio frequency path identifier as an initialization radio frequency path identifier;
when it is determined that there is a faulty component among the radio frequency components corresponding to the first radio frequency path identifier, selecting a second radio frequency path identifier from a plurality of pre-configured radio frequency path identifiers; and
scanning a radio frequency component corresponding to the second radio frequency path identifier, and when it is determined that there is no faulty component among the radio frequency components corresponding to the second radio frequency path identifier, taking the second radio frequency path identifier as an initialization radio frequency path identifier.

3. The method according to claim 2, comprising:
when there is no second radio frequency path identifier among the plurality of pre-configured radio frequency path identifiers, determining that a radio frequency system is in an offline mode.

4. The method according to claim 2 or 3, further comprising:
in a data transmission stage, in response to a demand for transmitting target data, scanning a radio frequency component corresponding to the initialization radio frequency path identifier;
when it is determined that there is no faulty component among the radio frequency components corresponding to the initialization radio frequency path identifier, transmitting the target data through the radio frequency components corresponding to the initialization radio frequency path identifier;
when it is determined that there is a faulty component among the radio frequency components corresponding to the initialization radio frequency path identifier, selecting a third radio frequency path identifier from the plurality of pre-configured radio frequency path identifiers; and
scanning radio frequency components corresponding to the third radio frequency path identifier, and when it is determined that there is no faulty component among the radio frequency components corresponding to the third radio frequency path identifier, transmitting the target data through the radio frequency components corresponding to the third radio frequency path identifier.

5. The method according to claim 4, comprising:
when there is no third radio frequency path identifier among the plurality of pre-configured radio frequency path identifiers, determining that a radio frequency system is in an offline mode.

6. The method according to claim 4 or 5, wherein said transmitting the target data comprises dialing an emergency number.

7. An apparatus for determining a radio frequency path, comprising:
a first scanning module configured to acquire a first radio frequency path identifier and scan radio frequency components corresponding to the first radio frequency path identifier;
a first determination module configured to take the first radio frequency path identifier as a target radio frequency path identifier when it is determined that there is no faulty component among the radio frequency components corresponding to the first radio frequency path identifier;
a first selection module configured to select a second radio frequency path identifier from a plurality of pre-configured radio frequency path identifiers when it is determined that there is a faulty component among the radio frequency components corresponding to the first radio frequency path identifier; and
a second determination module configured to scan a radio frequency component corresponding to the second radio frequency path identifier, and take the second radio frequency path identifier as a target radio frequency path identifier when it is determined that there is no faulty component among the radio frequency components corresponding to the second radio frequency path identifier.

8. An apparatus for determining a radio frequency path, comprising:
a second scanning module configured to in an initialization stage, acquire a first radio frequency path identifier in a configuration file and scan a radio frequency component corresponding to the first radio frequency path identifier;
a third determination module configured to take the first radio frequency path identifier as an initialization radio frequency path identifier when it is determined that there is no faulty component among the radio frequency components corresponding to the first radio frequency path identifier;
a second selection module configured to select a second radio frequency path identifier from a plurality of pre-configured radio frequency path identifiers when it is determined that there is a faulty component among the radio frequency components corresponding to the first radio frequency path identifier; and
a fourth determination module configured to scan a radio frequency component corresponding to the second radio frequency path identifier, and take the second radio frequency path identifier as an initialization radio frequency path identifier when it is determined that there is no faulty component among the radio frequency components corresponding to the second radio frequency path identifier.

9. An electronic device comprising: a processor, a memory and a communication bus, wherein the processor and the memory communicate with each other through the communication bus;
the memory is configured to store a computer program; and
the processor is configured to execute the program stored in the memory to implement the method for determining a radio frequency path of any one of claims 1 to 6.

10. A computer-readable storage medium in which a computer program is stored, wherein the computer program, when executed by a processor, implements the method for determining a radio frequency path of any one of claims 1 to 6.
